# EUROPÄISCHE PATENTSCHRIFT

(11) **EP 2 230 742 B1**
(45) Veröffentlichungstag und Bekanntmachung des Hinweises auf die Patenterteilung: **26.04.2017**
(21) Anmeldenummer: 09004052.8
(22) Anmeldetag: 20.03.2009
(51) Int. Cl.: H02J 1/10

(54) **Anordnung mit parallel geschalteten DC-Stromversorgungseinheiten**
Assembly with DC electricity supply units switch in parallel
Agencement doté d'unités d'alimentation en courant continu connectées en parallèle

(43) Veröffentlichungstag der Anmeldung: 22.09.2010
(73) Patentinhaber: Siemens Aktiengesellschaft, 80333 München (DE)
(72) Erfinder: Klamm, Arnold, 76870 Kandel (DE)

(56) Entgegenhaltungen:
- EP-A- 0 685 918
- WO-A-97/18612
- US-B1- 7 477 502

## Beschreibung

Die Erfindung betrifft eine Anordnung mit parallel geschalteten DC-Stromversorgungseinheiten gemäß dem Oberbegriff des Anspruchs 1. Ferner betrifft die Erfindung eine DC-Stromversorgungseinheit, welche für einen Einsatz in einer derartigen Anordnung geeignet ist.

Eine mit parallel geschalteten DC-Stromversorgungseinheiten versehene Anordnung, welche insbesondere für einen Einsatz in der Automatisierungstechnik geeignet ist, ist aus der DE 10 2005 014 992 A1 bekannt. In einer solchen Anordnung addiert sich in einem Idealfall die jeweilige verfügbare Leistung der Stromversorgungseinheiten, die zur Stromversorgung einer Last vorgesehen sind, zu einer Gesamtleistung. Dabei kann es vorkommen, dass für den Fall, dass zunächst eine der parallel geschalteten Stromversorgungseinheiten eingeschaltet wird, diese mit sehr hoher Wahrscheinlichkeit überlastet wird, da die Gesamtleistung zur Versorgung der Last die Leistung dieser Stromversorgungseinheit überschreitet. Aufgrund der Überlastung schaltet sich die Stromversorgungseinheit ab, wobei für den Fall, dass während des Abschaltens der Stromversorgungseinheit bzw. nach deren Abschalten eine weitere Stromversorgungseinheit der Anordnung eingeschaltet wird, sich auch diese aus den genannten Gründen abschaltet.

Um weitgehend zu vermeiden, dass die von einem Versorgungsnetz bzw. von einer Stromquelle gespeisten Stromversorgungseinheiten sich abschalten, kann ein gemeinsamer Schalter vorgesehen werden, mit welchem alle Stromversorgungseinheiten gleichzeitig geschaltet werden. Da jedoch die eingesetzten Stromversorgungseinheiten gewöhnlich unterschiedliche Anlaufcharakteristiken aufweisen, insbesondere aufgrund eines gemeinsamen Einsatzes von vorhandenen Stromversorgungseinheiten mit neu entwickelten, "kompatiblen" Stromversorgungseinheiten, kann eine Überlastung während des Anlaufs nicht ausgeschlossen werden. Darüber hinaus ist es schwer möglich, verschiedene Stromquellen als Energiequelle der jeweiligen Stromversorgungseinheit zu nutzen oder Stromversorgungseinheiten mit unterschiedlichen Leistungen bzw. Anlaufcharakteristiken parallel zu schalten.

Eine Anordnung gemäß dem Oberbegriff des Anspruchs 1 ist aus der EP 0 685 918 A1 bekannt.

Der vorliegenden Erfindung liegt die Aufgabe zugrunde, in einer Anordnung der eingangs genannten Art eine Überlastung von Stromversorgungseinheiten während des Einschaltens der Stromversorgungseinheiten bzw. während deren Wiederanlauf zu vermeiden. Darüber hinaus ist eine geeignete DC-Stromversorgungseinheit anzugeben, welche für einen Einsatz in einer derartigen Anordnung geeignet ist.

Im Hinblick auf die Anordnung wird diese Aufgabe durch die im kennzeichnenden Teil des Anspruchs 1 und im Hinblick auf die DC-Stromversorgungseinheit durch die im kennzeichnenden Teil des Anspruchs 2 angegebenen Maßnahmen gelöst.

Vorteilhaft ist, dass unterschiedliche Stromversorgungseinheiten, z. B. im Hinblick auf deren Leistung und Anlaufverhalten, sich parallel schalten lassen. Ferner braucht ein Anwender keinerlei Handhabungsvorschriften bezüglich des Einschaltens der Stromversorgungseinheiten bzw. im Hinblick auf die Schalterbetätigung zu beachten; Überlastungen durch Fehlbedienungen sind weitgehend ausgeschlossen. Darüber hinaus wird ermöglicht, die parallel geschalteten Stromversorgungseinheiten aus verschiedenen Quellen zu versorgen; eine Einspeisung in Form einer Netz- oder einer Batterie-Einspeisung ist möglich. Vorteilhaft ist ferner, dass zwischen den Stromversorgungseinheiten eine - gewöhnlich störanfällige - Kommunikation nicht erforderlich ist, um Informationen über den jeweiligen Zustand der Stromversorgungseinheiten zu übermitteln. Ein Wiederanlauf von überlasteten Stromversorgungseinheiten erfolgt automatisch; es ist nicht erforderlich, dass ein Anwender besondere Handhabungsvorschriften beachten muss.

Die Erfindung geht von der Idee aus, dass jede Stromversorgungseinheit nach dem Einschalten für eine kurze Zeitspanne eine Schwellspannung aufbauen kann, ehe diese Stromversorgungseinheit sich wegen eines Überlaststroms abschaltet. Das bedeutet, die Zeitspanne ist so gewählt, dass während dieser Zeitspanne die Stromversorgungseinheit aufgrund des Überlaststroms sicher nicht beschädigt wird. Die Schwellspannung ist die Spannung, welche die Stromversorgungseinheit bei einem Überlaststrom noch aufrechterhalten kann. Für eine Stromversorgungseinheit, die einen Maximalstrom von ca. 5 A bei einer Versorgungsspannung von 24 V liefert, liegt die Schwellspannung bei ca. 1 V. Diese Schwellspannung nutzt eine abgeschaltete weitere Stromversorgungseinheit dazu, sich automatisch wieder einzuschalten und ebenfalls eine Schwellspannung aufzubauen. Mit anderen Worten: die Schwellspannung der Stromversorgungseinheit ist zum Triggern der weiteren Stromversorgungseinheit vorgesehen. Dies wiederum veranlasst die abgeschaltete Stromversorgungseinheit dazu, sich ebenfalls wieder einzuschalten, wodurch die Teil-Ausgangsströme der beiden Stromversorgungseinheiten eine angeschlossene Last mit einem Gesamt-Ausgangsstrom speisen. Für den Fall, dass z. B. n (n = 1, 2, ...) DC-Stromversorgungseinheiten parallel eingesetzt werden, schalten sich (n-1) Stromversorgungseinheiten ein und aus, bis sich die n-te Stromversorgungseinheit einschaltet. Anschließend bleiben alle n Stromversorgungseinheiten eingeschaltet und versorgen eine angeschlossene Last mit einem Gesamtstrom, welcher die Summe aller Teilströme der Stromversorgungseinheiten umfasst. Eine derartige Anordnung aus parallel geschalteten Stromversorgungseinheiten und einer Last weist die Eigenschaft auf, dass eine einzige Stromversorgungseinheit eine Schwellspannung zum "Triggern" weiterer Stromversorgungseinheiten an der Last so lange aufbauen kann, bis diese nach einer Überlastung wieder angelaufen bzw. auch hochgefahren sind.

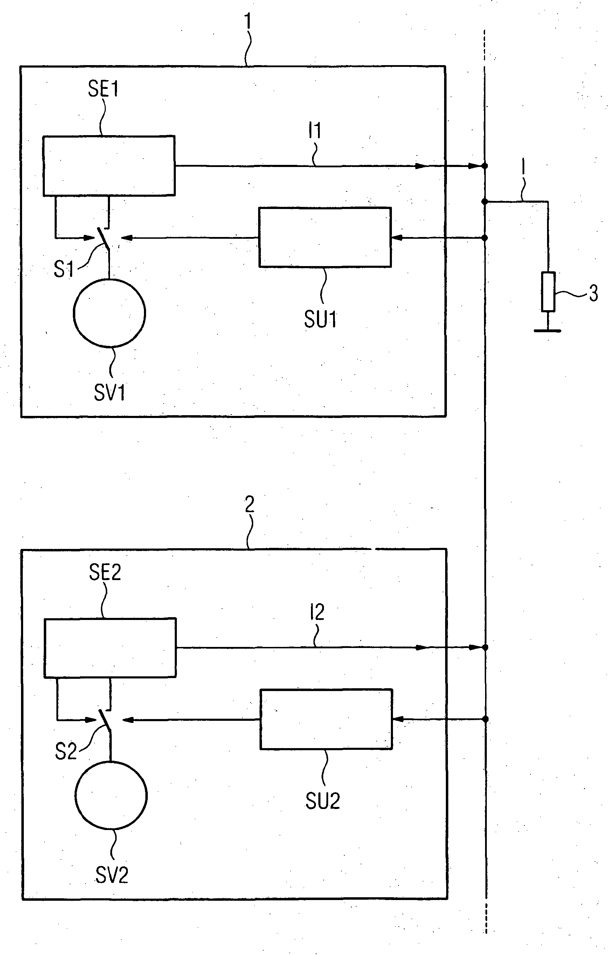

Die Erfindung wird nachfolgend anhand eines Ausführungsbeispiels unter Bezugnahme auf die einzige Figur der Zeichnung näher erläutert. Die Figur der Zeichnung zeigt in schematischer Darstellung eine Anordnung mit parallel geschalteten Stromversorgungseinheiten zur Stromversorgung einer Last.

Eine erste und eine zweite DC-Stromversorgungseinheit 1, 2 sind zur Versorgung einer Last 3 vorgesehen, von denen die erste Stromversorgungseinheit 1 eine Stromversorgung SV1 und die zweite Stromversorgungseinheit 2 eine Stromversorgung SV2 aufweist. Diese Stromversorgungen SV1, SV2 sind jeweils dazu ausgebildet, der Last 3 einen Teil-Ausgangsstrom I1, 12 einzuprägen. Dadurch kann die Last 3 mit einem Gesamt-Ausgangsstrom I versorgt werden, welcher gleich der Summe der TeilAusgangsströme I1, I2 ist. Selbstverständlich können weitere Stromversorgungseinheiten parallel geschaltet werden, um die Last mit einer geeigneten Spannung und einem Gesamt-Ausgangsstrom zu versorgen, welcher gleich der Summe von Teil-Ausgangsströmen dieser Stromversorgungseinheiten ist.

Es wird im Folgenden angenommen, dass zunächst die erste und dann die zweite Stromversorgungseinheit 1, 2 eingeschaltet wird. Aufgrund dessen, dass die erste Stromversorgungseinheit 1 alleine den Gesamtstrom I liefert, welcher ihren zulässigen Maximalstrom überschreitet, schaltet eine Strom-Überlasterkennung SE1 dieser ersten Stromversorgungseinheit 1 nach einer Zeitspanne von beispielsweise 0,5 bis 3 Sekunden ab. Die Abschaltung wird dadurch bewirkt, indem diese Strom-Überlasterkennung SE1 einen steuerbaren Schalter S1 öffnet, wodurch die Stromzufuhr unterbrochen wird. Die Zeitspanne ist so gewählt, dass einerseits während dieser Zeitspanne die erste Stromversorgungseinheit 1 aufgrund des Überlaststroms sicher nicht beschädigt wird und andererseits die Stromversorgungseinheit 1 bei diesem Überlaststrom noch eine Schwellspannung an der Last 3 aufrechterhalten kann. Nach dem Abschalten "wartet" die erste Stromversorgungseinheit 1 auf einen "spontanen" Spannungsabfall an der Last 3. Da die erste Stromversorgungseinheit 1 sich abgeschaltet hat, kann ein Spannungsabfall zu diesem Zeitpunkt nur durch eine weitere eingeschaltete Stromversorgungseinheit bewirkt werden. Ein Spannungsabfall an der Last 3 ist mittels einer Spannungserfassung SU1 der ersten Stromversorgungseinheit 1 erfassbar.

Es wird nun angenommen, dass die zweite Stromversorgungseinheit 2 bei abgeschalteter erster Stromversorgungseinheit 1 eingeschaltet wird. Für den Fall, dass die erste Stromversorgungseinheit 1 defekt ist und sich nicht mehr einschalten kann, liefert die zweite Stromversorgungseinheit 2 alleine den Gesamtstrom I, welcher ihren zulässigen Maximalstrom überschreitet, wobei eine Strom-Überlasterkennung SE2 dieser zweiten Stromversorgungseinheit 2 nach einer Zeitspanne von wiederum 0,5 bis 3 Sekunden abschaltet. Die Abschaltung wird durch diese Strom-Überlasterkennung SE2 bewirkt, die einen steuerbaren Schalter S2 öffnet, wodurch die Zufuhr des Stroms I2 der zweiten Stromversorgung SV2 zur Last 3 unterbrochen wird. Nach dem Abschalten "wartet" ebenfalls die zweite Stromversorgungseinheit 2 anschließend auf einen "spontanen" Spannungsabfall an der Last 3.

Für den Fall allerdings, dass die erste Stromversorgungseinheit 1 nicht defekt ist, erkennt die Spannungserfassung SU1 der ersten Stromversorgungseinheit 1 einen durch die zweite Stromversorgungseinheit 2 verursachten Spannungsabfall an der Last 3. Diese Spannungserfassung SU1 schließt den Schalter S1, wodurch die erste Stromversorgung SV1 der Last 3 einen Teil-Ausgangsstrom I1 zuführt. Der Gesamtstrom I ergibt sich aus der Summe der Teil-Ausgangsströme I1 und I2, wobei diese jeweils unterhalb der Maximalströme der Stromversorgungen SV1, SV2 liegen. Die sich aufgrund einer Überlast abgeschaltete Stromversorgungseinheit 1 ist somit automatisch wieder angelaufen bzw. wieder hochgefahren.

Im vorliegenden Ausführungsbeispiel wurde davon ausgegangen, dass zunächst die erste Stromversorgungseinheit 1 eingeschaltet und schließlich die zweite Stromversorgungseinheit 2 dazugeschaltet wird. Selbstverständlich ist es möglich, zunächst die zweite und dann die erste Stromversorgungseinheit 2, 1 einzuschalten. Ein Wiedereinschalten der zweiten Stromversorgungseinheit 2 erfolgt entsprechend der beschriebenen Art und Weise. In diesem Fall schaltet sich zunächst die zweite Stromversorgungseinheit 2 wegen einer Überlast ab und "wartet" auf eine Wiederkehr der Lastspannung. Erkennt die Spannungserfassung SU2 der zweiten Stromversorgungseinheit 2 einen durch die zugeschaltete erste Stromversorgungseinheit 1 verursachten Spannungsabfall an der Last 3, so schließt die Spannungserfassung SU2 den Schalter S2, wodurch die zweite Stromversorgung SV2 der Last 3 einen Teil-Ausgangsstrom I2 zuführt. So ist die zweite Stromversorgungseinheit 2 automatisch wieder angelaufen bzw. wieder hochgefahren und liefert zusammen mit dem Teil-Ausgangsstrom I1 der ersten Stromversorgungseinheit 1 den Gesamtstrom I für die Last 3.

## Patentansprüche

1. Anordnung mit parallel geschalteten DC-Stromversorgungseinheiten (1, 2), deren Stromversorgungen (SV1, SV2) jeweils einen Teil-Ausgangsstrom (I1, I2) zur Versorgung einer Last (3) mit einem Gesamt-Ausgangsstrom (I) erzeugen, wobei jede DC-Stromversorgungseinheit (1, 2) aufweist:
- einen steuerbaren Schalter (S1, S2), über welchen die Stromversorgung (SV1, SV2) den Teil-Ausgangsstrom (I1, I2) der Last (3) zuführt,
- eine Strom-Überlasterkennung (SE1, SE2), welche den Schalter (S1, S2) öffnet, falls der Teil-Ausgangsstrom (I1, I2) der Stromversorgung (SV1, SV2) für eine Zeitspanne, in welcher sich an der Last (3) eine Schwellspannung aufbaut, einen Maximalstrom überschreitet, wobei die Schwellspannung eine Spannung repräsentiert, welche die Stromversorgung (SV1, SV2) bei einem Überlaststrom noch aufrechterhalten kann,
**dadurch gekennzeichnet, dass** jede DC-Stromversorgungseinheit (1, 2) ferner eine Spannungserfassung (SU1, SU2) aufweist, welche den Schalter (S1, S2) schließt, falls die Lastspannung die Schwellspannung überschreitet.

2. DC-Stromversorgungseinheit (1,2) für eine Anordnung nach Anspruch 1, aufweisend :
- eine Stromversorgung (SV1, SV2)
- einen steuerbaren Schalter (S1, S2), über welchen die Stromversorgung (SV1, SV2) einen Teil-Ausgangsstrom (I1, I2) einer Last (3) zuführt,
- eine Strom-Überlasterkennung (SE1, SE2), welche den Schalter (S1, S2) öffnet, falls der Teil-Ausgangsstrom (I1, I2) der Stromversorgung (SV1, SV2) für eine Zeitspanne, in welcher sich an der Last (3) eine Schwellspannung aufbaut, einen Maximalstrom überschreitet, wobei die Schwellspannung eine Spannung repräsentiert, welche die Stromversorgung (SV1, SV2) bei einem Überlaststrom noch aufrechterhalten kann,
**dadurch gekennzeichnet, dass** die DC-Stromversorgungseinheit (1, 2) ferner eine Spannungserfassung (SU1, SU2) aufweist, welche den Schalter (S1, S2) schließt, falls die Lastspannung die Schwellspannung überschreitet.

## Claims

1. Arrangement with parallel-connected DC power supply units (1, 2), the power supplies (SV1, SV2) of which each generate a partial output current (I1, I2) for supplying a load (3) with an overall output current (I), wherein each DC power supply unit (1, 2) has:
- a controllable switch (S1, S2), by way of which the power supply (SV1, SV2) feeds the partial output current (I1, I2) to the load (3),
- a current overload recognition device (SE1, SE2), which opens the switch (S1, S2) if the partial output current (I1, I2) of the power supply (SV1, SV2) exceeds a maximum current for a period of time during which a threshold voltage is established on the load (3), with the threshold voltage representing a voltage which can still maintain the power supply (SV1, SV2) in the case of an overload current,
**characterised in that** each DC power supply unit (1, 2) also has a voltage detection device (SU1, SU2), which closes the switch (S1, S2) if the load voltage exceeds the threshold voltage.

2. DC power supply unit (1, 2) for an arrangement according to claim 1, having:
- a power supply (SV1, SV2)
- a controllable switch (S1, S2), by way of which the power supply (SV1, SV2) feeds a partial output current (I1, I2) to a load (3),
- a current overload recognition device (SE1, SE2), which opens the switch (S1, S2) if the partial output current (I1, I2) of the power supply (SV1, SV2) exceeds a maximum voltage for a period of time during which a threshold voltage is established on the load (3), with the threshold voltage representing a voltage which the power supply (SV1, SV2) can still maintain in the case of an overload current,
**characterised in that** the DC power supply unit (1, 2) also has a voltage detection device (SU1, SU2), which closes the switch (S1, S2) if the load voltage exceeds the threshold voltage.

## Revendications

1. Agencement ayant des unités (1, 2) d'alimentation en courant continu montées en parallèle, dont les alimentations (SV1, SV2) de courant produisent respectivement un courant (I1, I2) de sortie partiel d'alimentation d'une charge (3), par un courant (I) de sortie global, chaque unité (1, 2) d'alimentation en courant continu ayant :
- un interrupteur (S1, S2), qui peut être commandé et par lequel l'alimentation (SV1, SV2) en courant apporte le courant (I1, I2) de sortie partiel à la charge (3),
- une reconnaissance (SE1, SE2) de surcharge de courant, qui ouvre l'interrupteur (S1, S2), si le courant (I1, I2) de sortie partiel de l'alimentation (SV1, SV2) en courant dépasse un courant maximum pendant un laps de temps dans lequel une tension de seuil s'établit sur la charge (3), la tension de seuil représentant une tension, qui peut maintenir encore l'alimentation (SV1, SV2) en courant s'il y a un courant de surcharge,
**caractérisé en ce que** chaque unité (1, 2) d'alimentation en courant continu a, en outre, une détection (SU1, SU2) de tension, qui ferme l'interrupteur (S1, S2) si la tension de charge dépasse la tension de seuil.

2. Unité (1, 2) d'alimentation en courant continu pour un agencement suivant la revendication 1, comprenant
- une alimentation (SV1, SV2) en courant,
- un interrupteur (S1, S2), qui peut être commandé et par lequel l'alimentation (SV1, SV2) en courant apporte un courant (I1, I2) de sortie partiel à une charge (3),
- une reconnaissance (SE1, SE2) de surcharge de courant, qui ouvre l'interrupteur (S1, S2), si le courant (I1, I2) de sortie partielle de l'alimentation (SV1, SV2) en courant dépasse un courant maximum pendant un laps de temps dans lequel une tension de seuil s'établit sur la charge (3), la tension de seuil représentant une tension, qui peut maintenir encore l'alimentation (SV1, SV2) en courant s'il y a un courant de surcharge,
**caractérisée en ce que** l'unité (1, 2) d'alimentation en courant continu a, en outre, une détection (SU1, SU2) de tension, qui ferme l'interrupteur (S1, S2) si la tension de charge dépasse la tension de seuil.
